# FASCICULE DE BREVET EUROPEEN

(11) **EP 3 381 596 B1**
(45) Date de publication et mention de la délivrance du brevet: **13.11.2019**
(21) Numéro de dépôt: 18156272.9
(22) Date de dépôt: 12.02.2018
(51) Int. Cl.: B23H 11/00, B23H 9/00, F04C 2/08, B23H 7/02

(54) **MACHINE ET PROCEDE D'USINAGE PAR ELECTROEROSION DE POMPE GEROTOR**
MASCHINE UND VERFAHREN ZUR MASCHINELLEN BEARBEITUNG DURCH ELEKTROEROSION EINER GEROTOR-PUMPE
MACHINE AND METHOD FOR SPARK EROSION MACHINING OF A GEROTOR PUMP

(30) Priorité: 02.03.2017 BE 201705127
(43) Date de publication de la demande: 03.10.2018
(73) Titulaire: Safran Aero Boosters SA, 4041 Herstal (BE)
(72) Inventeur: FLORE, David, 4631 Evegnée (BE); PEIFFER, Philippe, 4801 Stembert (BE); VAN DEN ABEELE, Olivier, 4500 Tihange (BE)
(74) Mandataire: Lecomte & Partners

(56) Documents cités:
- JP-A- S5 937 019
- JP-A- S62 114 826
- US-A- 4 698 475
- US-A1- 2002 015 653
- US-A1- 2013 277 347
- US-A1- 2016 263 689

## Description

### Domaine technique

L'invention se rapporte au domaine de l'usinage par électroérosion. Plus précisément, l'invention traite du maintien et de l'évacuation d'une chute produite par électroérosion.

### Technique antérieure

L'usinage par électroérosion permet de produire des formes complexes tout en garantissant une précision élevée. Cette technologie permet notamment de tailler une bague dentée à l'intérieur d'une plaque formant un matériau de départ. Dans ce contexte, le fil servant d'électrode mobile décrit le tour de la bague dentée jusqu'à ce qu'elle se détache et tombant. Or, cette chute reste incontrôlée si bien que la bague dentée qui se détache peut bloquer le fil électrode. Un défaut peut alors apparaître.

Le document US4752665A divulgue une machine pour usinage par électroérosion. La machine comprend un plateau de récupération qui est fixé au bras inférieur d'où part le fil. Le plateau est placé sous la pièce brute afin d'en maintenir les chutes, ceci évite que ces dernières ne tombent de manière incontrôlée contre le fil d'usinage. Lorsque le porte-pièce recule, les chutes sont tirées par la pièce brute de départ, en restant dans leurs cavités respectives jusqu'à ce qu'elles tombent dans le réceptacle prévu à cet effet. En alternative, la machine comprend une pince de préhension et d'évacuation des chutes coniques par le dessus. Néanmoins, cette machine est encombrante. En particulier, elle requiert un dégagement important entre le bras inférieur et la pince de maintien de la pièce brute.

Les documents US 4 698 475 A et JP S62 114826 A divulguent des machines d'usinage par électroérosion. En particulier, le document US 4 698 475 A divulgue les préambules des revendications 1 et 7, et il équipe la machine d'un support mobile. Or, le maintien de la pièce découpée en fin d'usinage reste peu stable, si bien que le fil peut y former un défaut lorsque la pièce bascule ou chute.

### Résumé de l'invention

### Problème technique

L'invention a pour objectif de résoudre au moins un des problèmes posés par l'art antérieur. Plus précisément, l'invention a pour objectif d'améliorer le maintien d'une chute lors de son détachement. L'invention a également pour objectif d'optimiser la compacité d'une machine d'usinage par électroérosion équipée d'un dispositif de maintien de chute. L'invention a également pour objectif de proposer une solution résistante, légère, économique, fiable, commode d'entretien, d'inspection aisée, et améliorant le rendement.

### Solution technique

L'invention a pour objet une machine d'usinage par électroérosion, notamment de denture de pompe gerotor, la machine comprenant : un bâti avec un espace d'électroérosion d'une pièce; un fil de coupe par électroérosion ; un guide apte à guider le fil au travers de la pièce afin d'y découper une chute ; un support de chute monté mobile par rapport au guide, le support étant configuré pour se déplacer au moins entre une position de maintien sous l'espace d'électroérosion afin de pouvoir recueillir la chute, et une position en retrait, remarquable en ce que le support comprend une encoche qui est configurée de manière à ce que dans la position en retrait, le fil est en dehors de ladite encoche ; et dans la position de maintien le fil est engagé dans ladite encoche.

Selon des modes avantageux de l'invention, la machine peut comprendre une ou plusieurs des caractéristiques suivantes, prises isolément ou selon toutes les combinaisons techniques possibles :

Le support est mobile dans un plan perpendiculaire au fil, le support étant éventuellement configuré pour se déplacer entre une position au niveau du fil et une position à distance du fil, lesdites positions correspondant notamment à la position de maintien de la chute et à la position en retrait respectivement.

Le support comprend une encoche qui est configurée de manière à ce que dans la position en retrait, le fil est en dehors de ladite encoche ; et dans la position de maintien le fil est engagé dans ladite encoche, ladite encoche comprenant éventuellement un élargissement.

Le support présente une forme de fourche avec deux branches parallèles aptes à supporter la chute.

Le support comprend une surface supérieure horizontale apte à recevoir la chute.

La machine comprend un extracteur de chute apte à rentrer dans la chute.

L'extracteur comprend une portion expansible, éventuellement formée par deux leviers aptes à se déplacer l'un par rapport à l'autre afin de bloquer la chute.

La machine comprend un dispositif de fixation de pièce, ledit dispositif étant fixe par rapport au bâti.

Le support est mobile par rapport au bâti, et/ou le guide est mobile par rapport au bâti de la machine.

Le support est mobile par rapport au fil.

Le porte outil est fixe par rapport au bâti et/ou le support est mobile par rapport audit bâti.

L'extracteur est expansible selon la direction de déplacement du support et/ou perpendiculairement au fil.

Les directions principales de déplacement du support et de l'extracteur sont perpendiculaires.

La présence du support et de la tête ne sont pas des aspects indispensables de l'invention. L'invention a également pour objet une machine d'usinage par électroérosion, notamment de denture de pompe gerotor, la machine comprenant : un bâti ; un fil de coupe par électroérosion, ledit fil étant destiné à être déplacé au travers d'une pièce brute afin d'en séparer une chute ; remarquable en ce qu'elle comprend en outre un extracteur de chute apte à s'introduire dans et/ou à traverser de part en part la chute.

L'invention a également pour objet un procédé d'usinage par électroérosion, le procédé comprenant les étapes suivantes, éventuellement réalisées dans l'ordre qui suit : (a) fixation d'au moins une pièce de départ dans une machine d'usinage par électroérosion avec un bâti, un fil d'usinage par électroérosion maintenu par un guide, et un support mobile entre une position de retrait et une position sous la chute ; (b) usinage de la pièce de départ à l'aide du fil de manière à séparer une chute de la pièce de départ; remarquable en ce que le support mobile comprend une encoche, le procédé comprenant en outre une étape (c) déplacement du support mobile sous la chute de manière à ce que le fil rentre dans l'encoche, et de manière à bloquer la descente gravitationnelle de la chute lors de son détachement depuis la pièce de départ, la machine étant éventuellement conforme à l'invention.

Selon des modes avantageux de l'invention, le procédé peut comprendre une ou plusieurs des caractéristiques suivantes, prises isolément ou selon toutes les combinaisons techniques possibles :

La chute comprend un orifice, la machine comprend un extracteur, le procédé comprenant en outre une étape (d) introduction pendant laquelle l'extracteur rentre dans l'orifice de manière à maintenir la chute.

L'orifice traverse la chute, lors de l'étape (d) introduction l'extracteur traverse la chute.

Le procédé comprend en outre une étape (e) extraction de la chute en la soulevant à l'aide de l'extracteur.

A l'issue de l'étape (b) usinage, la pièce de départ forme une boucle fermée autour de la chute, notamment autour du contour de la chute.

Lors de l'étape (a) fixation, plusieurs pièces de départ sont fixées dans la machine d'usinage de manière à former un empilement de pièces de départ; et lors de l'étape (b) usinage, le fil usine simultanément chaque pièce de départ de l'empilement de manière à y former des chutes.

A l'issue de l'étape (b) usinage, les chutes sont identiques.

A l'issue de l'étape (b) usinage, le contour de la chute est renfermé dans la pièce.

Lors de l'étape (d) introduction, l'extracteur est disposé dans l'élargissement de l'encoche du support.

L'invention a également pour objet une méthode de fabrication d'une pompe à engrenages comprenant une bague dentée interne et une bague dentée externe, remarquable en ce que la bague dentée interne et/ou la bague dentée externe sont usinées selon un procédé d'usinage par électroérosion suivant l'invention, la méthode comprend en outre une étape (g) montage de la bague dentée interne dans la bague dentée externe.

Selon un mode avantageux de l'invention, à l'étape (g) montage, la bague dentée interne et/ou la bague dentée externe comprend/comprennent une/des denture(s) de forme(s) identique(s) à celle(s) obtenue(s) à l'issue de l'étape (b) usinage.

Selon un mode avantageux de l'invention, à l'étape (g) montage, la bague dentée interne et/ou la bague dentée externe comprend/comprennent des dentures dont la/les composition(s) chimique(s) est/sont identique(s) à celle(s) obtenue(s) à l'issue de l'étape (b) usinage.

Selon un mode avantageux de l'invention, à l'étape (g) montage, la bague dentée interne et/ou la bague dentée externe comprend/comprennent des dentures dont la/les dureté(s) est/sont identique(s) à celle(s) obtenue(s) à l'issue de l'étape (b) usinage.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention permet d'augmenter le degré d'automatisation de l'usinage par électroérosion. Les opérations de réglages ultérieures deviennent optionnelles. Le support comme l'extracteur apportent chacun un bénéfice allant vers l'automatisation; indépendamment l'un de l'autre. Aussi, l'invention permet de simplifier les programmes informatiques d'usinages puisque les mouvements respectifs entre le guide et le support sont plus simples à paramétrer.

### Brève description des dessins

La figure 1 représente une machine d'usinage par électroérosion selon l'invention.
La figure 2 montre un espace d'électroérosion de la machine d'usinage de la figure 1.
La figure 3 esquisse un extracteur de chute de la machine d'usinage de la figure 1.
La figure 4 est un diagramme du procédé d'usinage par électroérosion et d'une méthode de fabrication d'une pompe à engrenages selon l'invention.

### Description des modes de réalisation

Dans la présente invention, l'usinage par électroérosion est entendu comme un procédé d'usinage ou de découpe qui consiste à enlever de la matière dans une pièce en utilisant des décharges électriques. Ce procédé est couramment désigné par l'acronyme EDM qui correspond à l'expression anglo-saxonne « Electrical Discharge Machining ». Elle est particulièrement adaptée à l'enlèvement de matière de pièces électriquement conductrices telles que des pièces métalliques ou des pièces en graphite.

La direction longitudinale peut correspondre à la direction de déplacement du support entre sa position de maintien et sa position de retrait. La direction verticale peut correspondre à la direction d'insertion de l'extracteur dans une chute.

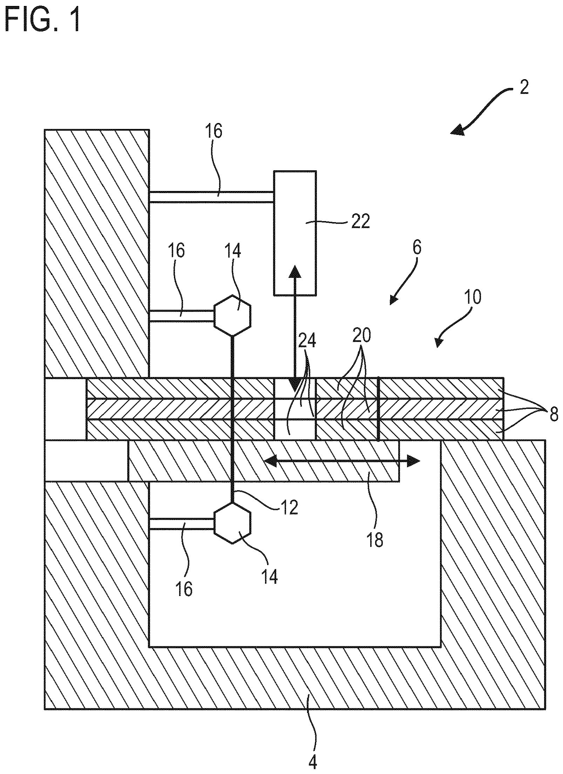

La figure 1 représente de manière simplifiée une machine 2 d'usinage par électroérosion.

La machine 2 comprend conventionnellement un bâti 4 et un espace d'électroérosion 6 recevant au moins une pièce 8 ou plusieurs pièces 8 à tailler. Chaque pièce 8 peut être une pièce de départ et/ou une pièce brute. En l'occurrence, trois pièces 8 sont superposées de manière à former un empilement 10, mais l'empilement peut contenir davantage ou moins de pièces 8. Ces pièces 8 peuvent être des plaques, par exemple des plaques d'acier. Les pièces 8 de l'empilement 10 sont fixées au bâti 4 à l'aide de brides ou de mâchoires (non représentées), afin de les immobiliser pendant leur enlèvement de matière par électroérosion. La machine 2 peut également comprendre un liquide (non représenté) dans lequel baigne une ou chaque pièce 8 afin de permettre le phénomène d'électroérosion.

La machine 2 comporte une électrode de découpe allongée, tel un fil 12 ou un ruban. La différence de potentiel entre le fil 12 et chaque pièce 8 permet une découpe par électroérosion. Afin de suivre un parcourt prédéfini et donc de tailler une forme souhaitée dans chaque pièce 8, le fil 12 est maintenu par des guides 14, dont un guide supérieur et un guide inférieur répartis de part et d'autres de l'empilement 10. Ces guides 14, également appelés têtes de guidage, peuvent être des guides mobiles par rapport au bâti 4, ce qui permet de suivre le tracé voulu lorsque l'empilement 10 est immobilisé par rapport au bâti 4. A cet effet, des bras mobiles 16 entrainent les guides 14. Les positions extrêmes du fil 12 peuvent délimiter l'espace d'électroérosion 6.

La machine 2 peut inclure une unité de commande (non représentée) permettant de déplacer les guides 14, et donc le fil 12, selon le tracé défini par une gamme d'usinage. Par ailleurs, le fil 12 peut défiler perpendiculairement à la direction d'empilement, et/ou d'un guide 14 vers l'autre guide. Ceci permet un renouvellement du fil 12 pendant la découpe.

Optionnellement, la machine 2 comporte un support 18 mobile. Le support 18 est disposé sous l'espace d'électroérosion 6, et donc sous l'empilement 10. A cette position, le support 18 parvient à retenir chaque chute 20 issue des pièces de départ 8. En effet, lorsque le fil 12 finit une boucle fermée, chaque chute 20 peut glisser vers le bas en raison de la gravité. En option ou en alternative, chaque chute peut basculer. Le mouvement de chaque chute 20 peut exercer un effort sur le fil 12 qui risque de marquer la chute 2 et le reste de la pièce 8, ce qui y crée un ou des défauts. Selon l'invention, il peut être considéré que l'élément mécanique à produire est la chute 20 ou le reste de la pièce 2 après évacuation de la chute 20.

Optionnellement, la machine 2 comprend un extracteur 22. Ce dernier peut être animé à l'aide d'un bras 16. L'extracteur 22 est adapté pour récupérer chaque chute 20 après détachement et descente contre le support 18. L'extracteur 22 est adapté pour récupérer l'ensemble des chutes 20 sous la forme d'un empilement de chutes. Cette récupération peut s'effectuer grâce à des orifices 24 formés dans chaque pièce 8, par exemple au centre de chaque chute 20. Les orifices peuvent être alignés de manière à permettre l'introduction de l'extracteur 22 dans l'empilement 10.

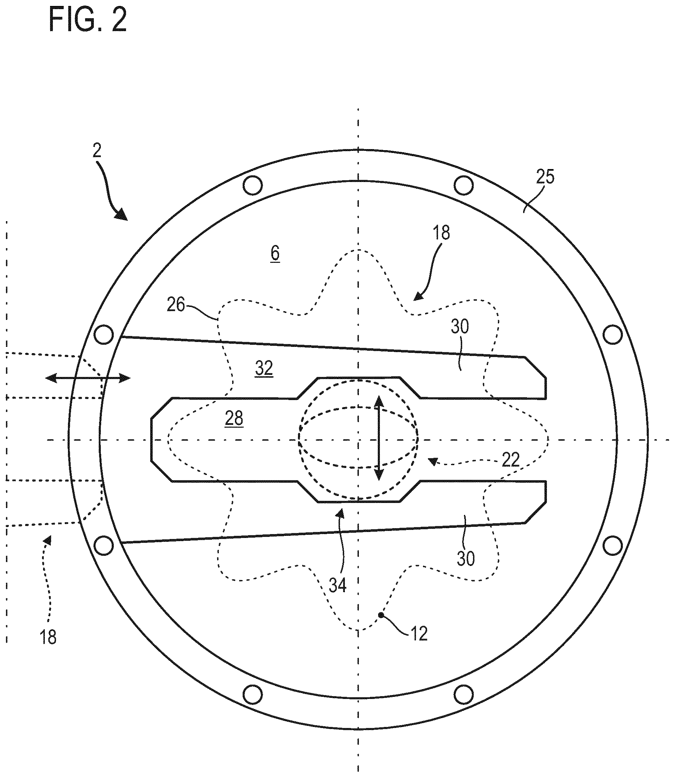

La figure 2 montre une portion de machine 2 d'usinage par électroérosion. La machine 2 peut être identique à celle représentée en figure 1. L'espace d'électroérosion 6 et le support 18 sont vus du dessus, la pièce et la chute ne sont pas représentés par soucis de clarté. Toutefois, le parcourt de coupe 26 suivi par le fil 12 est indiqué à l'aide d'un trait pointillé. Une bride de fixation 25 de l'empilement est visible.

En l'occurrence, le parcourt de coupe 26 permet de réaliser une couronne dentée, par exemple une denture de pompe à pignon (non représentée). Il peut s'agir d'une pompe gerotor, qui comprend de manière connue une bague externe à denture interne recevant une bague interne à denture externe. La bague interne est excentrée et comporte moins de dents que la bague externe.

Le support 18 est représenté sous l'espace d'électroérosion 6 à l'aide d'un trait continu. Dans cette position, le support 18 parvient à retenir une chute lorsqu'elle se détache. Cette position est alors une position de maintien ou une position de barrage. Ici, le support 18 traverse la majorité de l'espace 6, mais une proportion inférieure peut suffire à empêcher un déplacement incontrôlé d'une chute.

Le support 18 est également montré à l'aide d'un trait pointillé dans une position de retrait : en dehors de l'emprise de l'espace 6. Dans cette position, l'extrémité libre du support 18 est à distance du parcourt de coupe 26. Le support 18 peut être à distance du fil 12.

Le support 18 peut généralement être une plaque. Il peut présenter une encoche 28, par exemple une encoche longitudinale. Le présent mouvement du support 18 est ici une translation, toutefois il pourrait s'agir d'un mouvement de rotation.

Le support 18 peut former une fourche. Il peut présenter deux branches 30 de part et d'autres de l'encoche 28. Chaque branche 30 peut s'étendre sur la majorité du support 18, ou du moins de la surface supérieure 32 du support 18 entrant en contact d'une chute lors du détachement. Aussi, l'encoche 28 peut présenter un élargissement 34.

Eventuellement, la position de l'élargissement 34 peut coïncider avec celle des orifices. Par ailleurs, l'emplacement de cet élargissement 34 peut être adapté pour recevoir l'extracteur 22 (tracé en trait pointillés) lorsque celui-ci traverse l'empilement et que le support 18 est dans la position de maintien. Par ailleurs, l'extrémité inférieure de l'extracteur 22 est représentée en deux largueurs puisque l'extracteur est expansible.

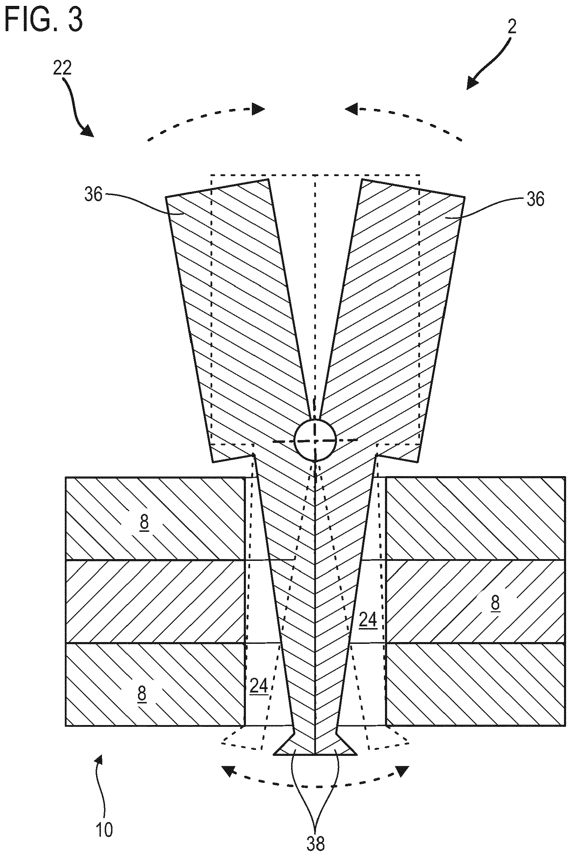

La figure 3 esquisse une portion de machine d'usinage par électroérosion. La machine 2 peut être identique à celle représentée en relation avec les figures 1 à 2. L'empilement 10 de pièces 8 est traversé par l'extracteur 22 au niveau des orifices 24. L'ensemble des orifices 24 forme un passage traversant l'empilement 10.

L'extracteur 22 est expansible, notamment à l'intérieur de l'empilement 10. En grossissant, il se cale dans un ou dans chaque orifice 24. Par friction, il peut bloquer chaque chute. Lorsqu'il est soulevé, il emmène les chutes avec lui. L'extracteur 22 peut être formé de parties mobiles s'écartant les unes des autres afin d'épouser les orifices 24.

A titre d'exemple, l'extracteur 22 peut comporter deux leviers 36 pivotant l'un par rapport à l'autre. Il peut avoir une forme de ciseaux. En basculant et en s'approchant de la surface interne d'un orifice 24, les leviers 36 bloquent l'orifice 24 et sont adaptés pour soulever la pièce 8 ou la chute correspondante. Des saillies 38 aux extrémités inférieures améliorent encore la sécurité de maintien. L'extraction devient plus sûre.

L'extracteur 22 peut être mobile selon plusieurs mouvements. Il peut être mobile selon une direction verticale d'insertion dans l'empilement, et un mouvement d'expansion. L'extracteur 22 occupe une position d'engagement dans l'empilement 10 à la figure 3, tandis qu'il est en position de dégagement en figure 1.

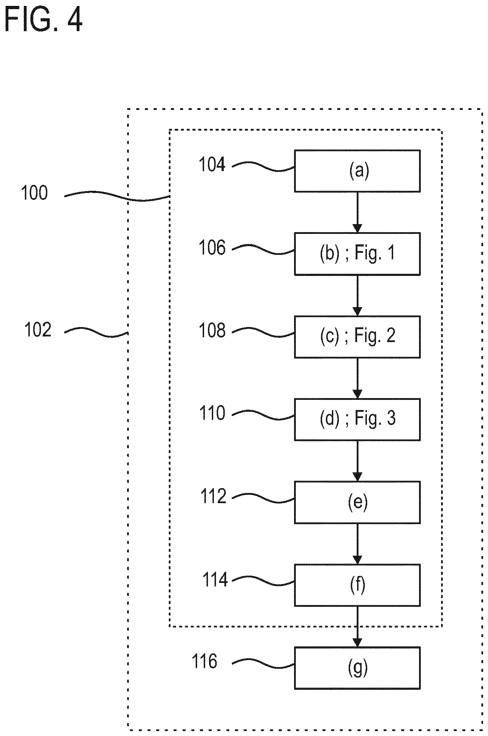

La figure 4 représente un diagramme d'un procédé 100 d'usinage par électroérosion à l'aide d'une machine d'usinage par électroérosion. Le procédé 100 peut faire partie d'une méthode de fabrication 102 d'une pompe à engrenages. La machine utilisée peut être conforme à l'une de celles décrites en relation avec l'une des figures 1 à 3.

Le procédé 100 peut comprendre les étapes suivantes, éventuellement réalisées dans l'ordre qui suit :
(a) fixation 104 d'un empilement de pièces de départ dans la machine d'usinage par électroérosion ;
(b) usinage 106 des pièces à l'aide du fil de manière à détacher plusieurs chutes des pièces de départ;
(c) déplacement 108 du support mobile sous les chutes pour réduire leur descente gravitationnelle survenant à leur détachement, et pour bloquer leurs éventuels mouvements ;
(d) introduction 110 de l'extracteur dans les orifices ;
(e) extraction 112 de la chute en la soulevant à l'aide de l'extracteur ;
(f) retrait 114 du support en dehors de l'emprise de l'espace d'électroérosion.

Préalablement à l'étape (a) fixation, chaque pièce peut être taillée de manière à y former un orifice. Dans une pompe, cet orifice peut servir pour entrainer en rotation la bague correspondante. Ici, les pièces sont pressées les unes contre les autres à l'aide de brides de fixation. Les pièces peuvent être libres de fixation les unes aux autres.

A l'issue de l'étape (b) usinage 106, chaque pièce de départ forme une boucle fermée autour de sa chute, notamment autour du contour de sa chute. Cet aspect peut obliger une extraction de la chute par le dessus. Lors de l'étape (b) usinage 106, le fil coupe simultanément toutes les pièces de l'empilement de manière à y former des chutes. Les chutes sont formées en même temps, et peuvent être similaires. Les parties restantes des pièces peuvent également être similaires.

Dès que l'usinage atteint un point où une chute est susceptible de se détacher, le support est sorti lors de l'étape (c) déplacement 108. Un jeu compris entre 0,05 mm et 5 mm peut être prévu entre le dessus du support et le dessous de la pièce inférieure.

L'étape (b) usinage 106 se poursuit jusqu'au détachement de chaque chute. Dans cet état, chaque chute repose sur le support ou les unes sur les autres. Alors, l'extracteur s'introduit dans l'empilement lors de l'étape (d) introduction 110 comme à la figure 3. L'extracteur peut rentrer partiellement dans l'empilement, et éventuellement le traverser totalement. Ensuite, l'extracteur sort les chutes en les soulevant à l'étape (e) extraction 112. Il est à remarquer que l'expansion de l'extracteur peut être réalisée à la fin de l'étape (d) introduction 110 ou au début de l'étape (e) extraction 112.

Puisque la chute est évacuée de l'empilement et donc de l'espace d'électroérosion, le support peut être rentré lors de l'étape (f) retrait 114. Ainsi, il est à distance de toute position que peut atteindre le fil. Il laisse libre l'espace d'électroérosion pour ne pas perturber un futur usinage.

A la suite de l'étape (f) retrait 114 du procédé 100, la méthode 102 comprend une étape (g) montage 116 de bague dentée interne dans une bague dentée externe afin de réaliser une pompe à engrenage. Chacune de ces bagues peut être réalisée à l'aide d'étape du procédé 100 d'usinage par électroérosion.

A l'étape (g) montage 116, les dentures des bagues interne comme externe comprennent chacune une géométrie identique à la géométrie obtenue à l'issue de l'étape (b) usinage 106. Les masses des bagues restent identiques d'une étape à l'autre.

A l'étape (g) montage 116, les dentures des bagues comprennent chacune une composition chimique identique, et/ou une rugosité identique, et/ou une dureté identique à l'état obtenu à l'issue de l'étape (b) usinage 106. Cela se traduit par le fait que l'état d'une denture telle que taillée à la fin de l'étape (b) usinage 106 convient à une utilisation directe dans une pompe à engrenage pour huile.

## Revendications

1. Machine (2) d'usinage par électroérosion, notamment de denture de pompe gerotor, la machine (2) comprenant :
- un bâti (4) avec un espace d'électroérosion (6) d'une pièce (8) ;
- un fil (12) de coupe par électroérosion ;
- un guide (14) apte à guider le fil (12) au travers de la pièce (8) afin d'y découper une chute (20) ;
- un support (18) de chute (20) monté mobile par rapport au guide (14), le support (18) étant configuré pour se déplacer au moins entre une position de maintien sous l'espace d'électroérosion (6) afin de pouvoir recueillir la chute (20), et une position en retrait,
**caractérisée en ce que**
le support (18) comprend une encoche (28) qui est configurée de manière à ce que dans la position en retrait, le fil (12) est en dehors de ladite encoche (28) ; et dans la position de maintien le fil (12) est engagé dans ladite encoche.

2. Machine (2) selon la revendication 1, **caractérisée en ce que** le support est mobile dans un plan perpendiculaire au fil (12), le support (18) étant éventuellement configuré pour se déplacer entre une position au niveau du fil (12) et une position à distance du fil, lesdites positions correspondant notamment à la position de maintien de la chute (20) et à la position en retrait respectivement.

3. Machine (2) selon l'une des revendications 1 à 2, **caractérisée en ce que** le support (18) présente une forme de fourche avec deux branches (30) parallèles aptes à supporter la chute (20), l'encoche comprenant éventuellement un élargissement (34).

4. Machine (2) selon l'une des revendications 1 à 3, **caractérisée en ce qu'**elle comprend un extracteur (22) de chute apte à rentrer dans la chute (20).

5. Machine (2) selon la revendication 4, **caractérisée en ce que** l'extracteur (22) comprend une portion expansible, éventuellement formée par deux leviers (36) aptes à se déplacer l'un par rapport à l'autre afin de bloquer la chute (20).

6. Machine (2) selon l'une des revendications 1 à 5, **caractérisée en ce que** le support (18) est mobile par rapport au bâti (4), et/ou le guide (14) est mobile par rapport au bâti (4) de la machine.

7. Procédé (100) d'usinage par électroérosion, le procédé comprenant les étapes suivantes, éventuellement réalisées dans l'ordre qui suit :
(a) fixation (104) d'au moins une pièce de départ (8) dans une machine d'usinage par électroérosion avec un bâti (4), un fil (12) d'usinage par électroérosion maintenu par un guide (14), et un support mobile (18) entre une position de retrait et une position sous la chute ;
(b) usinage (106) de la pièce de départ (8) à l'aide du fil (12) de manière à séparer une chute (20) de la pièce de départ;
**caractérisé en ce que** le support mobile (18) comprend une encoche (28),
le procédé comprenant en outre une étape (c) déplacement (108) du support mobile sous la chute (20) de manière à ce que le fil (12) rentre dans l'encoche (28), et de manière à bloquer la descente gravitationnelle de la chute lors de son détachement depuis la pièce de départ (8), la machine (2) étant éventuellement conforme à l'une des revendications 1 à 6.

8. Procédé (100) selon la revendication 7, **caractérisé en ce que** la chute (20) comprend un orifice (24), la machine comprend un extracteur (22), le procédé comprenant en outre une étape (d) introduction (110) pendant laquelle l'extracteur (22) rentre dans l'orifice (24) de manière à maintenir la chute (20), et lors de l'étape (d) introduction (110) l'extracteur (22) traverse la chute (20).

9. Procédé (100) selon l'une des revendications 7 à 8, **caractérisé en ce qu'**il comprend en outre une étape (e) extraction (112) de la chute (20) en la soulevant à l'aide de l'extracteur (22).

10. Procédé (100) selon l'une des revendications 7 à 9, **caractérisé en ce qu'**à l'issue de l'étape (b) usinage (106), la pièce de départ (8) forme une boucle fermée autour de la chute, notamment autour du contour de la chute (20).

11. Procédé (100) selon l'une des revendications 7 à 10, **caractérisé en ce que** lors de l'étape (a) fixation (104), plusieurs pièces de départ (8) sont fixées dans la machine (2) d'usinage de manière à former un empilement (10) de pièces de départ; et lors de l'étape (b) usinage (106), le fil (12) usine simultanément chaque pièce de départ (8) de l'empilement (10) de manière à y former des chutes (20).

12. Méthode (102) de fabrication d'une pompe à engrenages comprenant une bague dentée interne et une bague dentée externe, **caractérisée en ce que** la bague dentée interne et/ou la bague dentée externe sont usinées selon un procédé (100) d'usinage par électroérosion suivant l'une des revendications 7 à 11, la méthode (102) comprenant en outre une étape (g) montage (116) de la bague dentée interne dans la bague dentée externe.

13. Méthode (102) selon la revendication 12, **caractérisée en ce qu'**à l'étape (g) montage (116), la bague dentée interne et/ou la bague dentée externe comprend/comprennent une/des denture(s) de forme(s) identique(s) à celle(s) obtenue(s) à l'issue de l'étape (b) usinage (106).

14. Méthode (102) selon l'une des revendications 12 à 13, **caractérisée en ce qu'**à l'étape (g) montage (116), la bague dentée interne et/ou la bague dentée externe comprend/comprennent des dentures dont la/les composition(s) chimique(s) est/sont identique(s) à celle(s) obtenue(s) à l'issue de l'étape (b) usinage (106).

15. Méthode (102) selon l'une des revendications 12 à 14, **caractérisée en ce qu'**à l'étape (g) montage (116), la bague dentée interne et/ou la bague dentée externe comprend/comprennent des dentures dont la/les dureté(s) est/sont identique(s) à celle(s) obtenue(s) à l'issue de l'étape (b) usinage (106).

## Patentansprüche

1. Maschine (2) zur Elektroerosionsbearbeitung, insbesondere von Gerotor Zahnringpumpen, wobei die Maschine (2) folgendes umfasst:
- einen Rahmen (4) mit einem Elektroerosionsraum (6) aus einem Stück (8);
- einen Draht (12) zum Elektroerosionsschneiden;
- eine Führung (14), die den Draht (12) durch das Werkstück (8) führen kann, um daraus ein Schnittstück (20) zu schneiden;
- eine Stütze (18) für das Schnittstück (20), die bezüglich der Führung (14) beweglich ist, wobei die Stütze (18) so konfiguriert ist, dass sie sich zumindest zu einer Halteposition unter dem Elektroerosionsraum (6) bewegen kann um das Schnittstück (20) aufzunehmen und dann eine Rückzugsposition einzunehmen,
die **dadurch gekennzeichnet ist, dass**
die Stütze (18) eine Kerbe (28) aufweist, die so konfiguriert ist, dass der Draht (12) in der Rückzugsposition außerhalb der genannten Kerbe (28) liegt und in der Halteposition in der genannten Kerbe liegt.

2. Maschine (2) nach Anforderung 1 ist **dadurch gekennzeichnet, dass** die Stütze in einer Ebene senkrecht zum Draht (12) beweglich ist, wobei die Stütze (18) gegebenenfalls konfiguriert ist, um sich zwischen einer Position auf der Ebene des Drahtes (12) und einer Position in Abstand vom Draht zu bewegen, wobei die Positionen insbesondere der Halteposition des Schnittstücks (20) und der Rückzugsposition entsprechen.

3. Maschine (2) nach einer der Anforderungen 1 bis 2 ist **dadurch gekennzeichnet, dass** die Stütze (18) eine Gabelform mit zwei parallelen Schenkeln (30) hat, die zum Tragen des Schnittstücks (20) geeignet sind, wobei die Kerbe gegebenenfalls eine Erweiterung (34) umfasst.

4. Maschine (2) nach einer der Anforderungen 1 bis 3 ist **dadurch gekennzeichnet, dass** sie eine Ausziehvorrichtung (22) umfasst, die das Schnittstück (20) greifen kann.

5. Maschine (2) nach Anforderung 4 ist **dadurch gekennzeichnet, dass** die Ausziehvorrichtung (22) einen erweiterbaren Teil hat, der gegebenenfalls aus zwei Hebeln (36) besteht, die sich relativ zueinander bewegen können, um das Schnittstück (20) zu blockieren.

6. Maschine (2) nach einer der Anforderungen 1 bis 5 ist **dadurch gekennzeichnet, dass** die Stütze (18) relativ zum Rahmen (4) beweglich ist und/oder die Führung (14) in Bezug auf den Maschinenrahmen (4) beweglich ist.

7. Verfahren (100) zur Elektroerosionsbearbeitung, wobei das Verfahren die vorzugsweise in der nachstehenden Reihenfolge durchgefürhten folgenden Schritte umfasst:
(a) Fixieren (104) mindestens eines Werkstücks (8) in einer Elektroerosionsmaschine mit einem Rahmen (4), einem Draht (12) zur Bearbeitung durch Elektroerosion mit einer Führung (14) und einer beweglichen Stütze (18) zwischen einer Rückzugsposition und einer Position unter dem Schnittstück;
(b) Bearbeiten (106) des Werkstücks (8) mit dem Draht (12), um ein Schnittstück (20) vom Werkstück zu trennen;
**gekennzeichnet dadurch, dass** die bewegliche Stütze (18) eine Kerbe (28) hat, wobei das Verfahren außerdem einen Schritt (c) umfasst, der die Bewegung (108) unter dem Schnittstück (20) so ausführt, dass der Draht (12) in der Kerbe (28) einhakt, um den schwerkraftbedingten Fall des Schnittstücks zu blockieren, wenn es vom Werkstück (8) gelöst wird, wobei die Maschine (2) gegebenenfalls einer der Anforderungen 1 bis 6 entspricht.

8. Verfahren (100) nach Anforderung 7 ist **dadurch gekennzeichnet, dass** das Schnittstück (20) eine Öffnung (24) hat, die Maschine eine Ausziehvorrichtung (22) umfasst, wobei das Verfahren zusätzlich einen Einführungsschritt (d) (110) enthält, bei dem die Ausziehvorrichtung (22) in die Öffnung (24) eintritt, um das Schnittstück (20) zu halten, und die Ausziehvorrichtung (22) während des Einführungsschritts (d) (110) das Schnittstück (20) durchläuft.

9. Verfahren (100) nach einer der Anforderungen 7 bis 8 ist **dadurch gekennzeichnet, dass** es außerdem einen Schritt (e) zum Herausziehen (112) des Schnittstücks (20) durch Anheben mithilfe der Ausziehvorrichtung (22) umfasst.

10. Verfahren (100) nach einer der Anforderungen 7 bis 9 ist **dadurch gekennzeichnet, dass** am Ende des Schrittes (b) der Bearbeitung (106) das Werkstück (8) einen geschlossenen Kreislauf um das Schnittstück bildet, insbesondere um den Rahmen des Schnittstücks (20).

11. Verfahren (100) nach einer der Anforderungen 7 bis 10 ist **dadurch gekennzeichnet, dass** in Schritt (a) Fixierung (104), mehrere Werkstücke (8) in der Bearbeitungsmaschine (2) fixiert sind, um einen Stapel (10) von Werkstücken zu bilden; und in Schritt (b) Bearbeitung (106), bearbeitet der Draht (12) gleichzeitig jedes Werkstück (8) des Stapels (10), um darin Schnittstücken (20) zu bilden.

12. Verfahren (102) zur Herstellung einer Zahnradpumpe mit einem inneren und einem äußeren Zahnring ist **dadurch gekennzeichnet, dass** der innere und/oder äußere Zahnkranz nach einem Verfahren (100) zur Elektroerosionsbearbeitung entsprechend einer der Anforderungen 7 bis 11 hergestellt wird, wobei das Verfahren (102) außerdem einen Schritt (g) beinhaltet: Montage (116) des inneren Zahnrings in den äußeren Zahnring.

13. Verfahren (102) nach Anforderung 12 ist **dadurch gekennzeichnet, dass** bei Schritt (g) Montage (116), der innere und/oder äußere Zahnring eine Verzahnung(en) mit identischer(n) Form(en) hat, die mit der (den) am Ende von Schritt (b) Bearbeitung (106) erhaltenen übereinstimmt (en).

14. Verfahren (102) nach einer der Anforderungen 12 bis 13 ist **dadurch gekennzeichnet, dass** bei Schritt (g) Montage (116), des inneren und/oder äußeren Zahnrings Verzahnungen beinhaltet, deren chemische Zusammensetzung(en) mit derjenigen am Ende von Schritt (b) der Bearbeitung (106) identisch ist/sind.

15. Verfahren (102) nach einer der Anforderungen 12 bis 14 ist **dadurch gekennzeichnet, dass** bei Schritt (g) (116) der innere und/oder äußere Zahnring Verzahnungen umfasst, deren Härte(n) mit der/den am Ende von Schritt (b) der Bearbeitung (106) erhaltenen identisch ist/sind.

## Claims

1. Machine (2) for wire erosion machining, notably for machining the toothing of a gerotor pump, the machine (2) comprising:
- a frame (4) with a space (6) for the wire erosion of a workpiece (8);
- a wire (12) for wire erosion cutting;
- a guide (14) for guiding the wire (12) through the workpiece (8) to cut an offcut (20) out of it;
- a support (18) for an offcut (20), movably mounted relative to the guide (14), the support (18) being configured to move at least between a retaining position under the wire erosion space (6), where it can collect the offcut (20), and a retracted position,
**characterized in that**
the support (18) comprises a notch (28) which is configured such that, in the retracted position, the wire (12) is outside said notch (28) and, in the retaining position, the wire (12) is engaged in said notch.

2. Machine (2) according to Claim 1, **characterized in that** the support is movable in a plane perpendicular to the wire (12), the support (18) being potentially configured to move between a position nearby the wire (12) and a position remote from the wire, said positions corresponding, notably, to the offcut (20) retaining position and the retracted position, respectively.

3. Machine (2) according to either of Claims 1 and 2, **characterized in that** the support (18) is fork-shaped, with two parallel branches (30) for supporting the offcut (20), said notch having potentially an enlargement (34).

4. Machine (2) according to any of Claims 1 to 3, **characterized in that** it comprises an offcut extractor (22) capable of entering the offcut (20).

5. Machine (2) according to Claim 4, **characterized in that** the extractor (22) comprises an expandable portion, potentially formed by two levers (36) that can move relative to one another to lock the offcut (20).

6. Machine (2) according to any of Claims 1 to 5, **characterized in that** the support (18) is movable relative to the frame (4), and/or the guide (14) is movable relative to the frame (4) of the machine.

7. Method (100) of wire erosion machining, the method comprising the following steps, optionally executed in the following order:
(a) fixing (104) at least one initial workpiece (8) in a machine for wire erosion machining, with a frame (4), a wire (12) for wire erosion machining, retained by a guide (14), and a support (18) movable between a retracted position and a position under the offcut;
(b) machining (106) the initial workpiece (8) by means of the wire so as to detach an offcut (20) from the initial workpiece;
**characterized in that** the movable support (18) comprises a notch (28),
the method further comprising a step (c) of moving (108) the movable support under the offcut (20) so that the wire (12) enters the notch (28), and so as to stop the gravitational descent of the offcut when it is detached from the initial workpiece (8), the machine (2) being preferably in accordance with any of Claims 1 to 6.

8. Method (100) according to Claim 7, **characterized in that** the offcut (20) comprises an aperture (24) and the machine comprises an extractor (22), the method further comprising an introduction step (d) (110) during which the extractor (22) enters the aperture (24) so as to retain the offcut (20), and during the introduction step (d) (110) the extractor (22) passes through the offcut (20).

9. Method (100) according to any of Claims 7 or 8, **characterized in that** it further comprises a step (e) of extracting (112) the offcut (20) by lifting it with the aid of the extractor (22).

10. Method (100) according to any of Claims 7 to 9, **characterized in that**, at the end of the machining step (b) (106), the initial workpiece (8) forms a closed loop around the offcut, notably around the contour of the offcut (20).

11. Method (100) according to any of Claims 7 to 10, **characterized in that**, in the fixing step (a) (104), a number of initial workpieces (8) are fixed in the machining machine (2) so as to form a stack (10) of initial workpieces, and in the machining step (b) (106) the wire (12) simultaneously machines each initial workpiece (8) in the stack (10) so as to form offcuts (20) there.

12. Method (102) for manufacturing a gear pump comprising an inner toothed ring and an outer toothed ring, **characterized in that** the inner toothed ring and/or the outer toothed ring are machined by a method (100) of wire erosion machining according to any of Claims 7 to 11, the procedure (102) further comprising a step (g) of fitting (116) the inner toothed ring into the outer toothed ring.

13. Method (102) according to Claim 12, **characterized in that**, in the fitting step (g) (116), the inner toothed ring and/or the outer toothed ring comprises toothing having a shape identical to that produced at the end of the machining step (b) (106).

14. Method (102) according to either of Claims 12 and 13, **characterized in that**, in the fitting step (g) (116), the inner toothed ring and/or the outer toothed ring comprises toothing whose chemical composition is identical to that produced at the end of the machining step (b) (106).

15. Method (102) according to any of Claims 12 to 14, **characterized in that**, in the fitting step (g) (116), the inner toothed ring and/or the outer toothed ring comprises toothing whose hardness is identical to that produced at the end of the machining step (b) (106).
